# EUROPÄISCHE PATENTSCHRIFT

(11) **EP 1 050 217 B1**
(45) Veröffentlichungstag und Bekanntmachung des Hinweises auf die Patenterteilung: **17.08.2005**
(21) Anmeldenummer: 00108888.9
(22) Anmeldetag: 27.04.2000
(51) Int. Cl.: A23G 3/22

(54) **Vorrichtung zum Überziehen von Warenstücken**
Apparatus for coating articles
Dispositif pour l'enrobage des articles

(30) Priorität: 03.05.1999 DE 19920071
(43) Veröffentlichungstag der Anmeldung: 08.11.2000
(73) Patentinhaber: Sollich KG, 32105 Bad Salzuflen (DE)
(72) Erfinder: Heyde, Hans, 49134 Wallenhorst (DE)
(74) Vertreter: Rehberg Hüppe + Partner

(56) Entgegenhaltungen:
- DE-A- 19 724 641
- GB-A- 2 204 775
- US-A- 1 688 149
- US-A- 5 437 723

## Beschreibung

Die Erfindung betrifft eine Vorrichtung zum Überziehen von Warenstücken, insbesondere Süßwarenstücken, mit einer fließfähigen Überzugsmasse, mit einem endlosen Transportband für die Aufnahme der Warenstücke, einem unterhalb des Transportbandes angeordneten Ablaufblech und einer angetriebenen Einrichtung zur Unterstützung der Rückleitung überschüssiger Überzugsmasse auf dem Ablaufblech. Derartige Vorrichtungen werden auch als Überziehmaschinen bezeichnet. Sie werden bei der Produktion von Warenstücken, insbesondere Pralinen, Riegeln, Backwaren u. dgl., dazu eingesetzt, um einen Überzug auf die Warenstücke zu bringen bzw. die Warenstücke mit einem solchen Überzug zu umhüllen. Als Überzugsmasse wird vorzugsweise Schokolademasse eingesetzt. Aber auch Überzugsmassen aus Fett- oder Zuckerglasuren sind üblich. Die Überzugsmasse wird flüssig in der Überziehmaschine über die Warenstücke geleitet, die auf einem endlosen durchfließbaren Transportband aufliegen und so durch die Überzugsmaschine geführt werden. Beim Überziehen wird immer mit Überschuß gearbeitet, so daß überschüssige Überzugsmasse durch das Transportband hindurch gelangt. Unterhalb des Transportbandes ist ein Ablaufblech vorgesehen, welches in der Regel geneigt angeordnet ist und zu einem Auffangbehälter führt. Auf diese Art und Weise gelangt überschüssige Überzugsmasse in einen Rücklauf und wird so, immer wieder ergänzt durch weitere Überzugsmasse, im Kreislauf geführt.

Die eingesetzten Überzugsmassen besitzen unterschiedliche Eigenschaften, insbesondere was ihre Fließfähigkeit bei entsprechender Temperatur betrifft. So gelingt es bei manchen Massen, durch eine stärkere Neigung des Ablaufbleches allein die Schwerkraft auszunutzen, um die Rückleitung überschüssiger Überzugsmasse auf dem Ablaufblech zu gewährleisten. Insbesondere bei Verwendung von thixotropen und/oder fettarmen Massen als Überzugsmasse ist ein ordnungsgemäßer Ablauf allein unter Schwerkrafteinfluß jedoch nicht gewährleistet, so daß solche Massen die Neigung haben, sich auf dem Ablaufblech aufzubauen. Es ist deshalb bereits bekannt, eine angetriebene Einrichtung zur Unterstützung der Rückleitung überschüssiger Überzugsmasse auf dem Ablaufblech einzusetzen. Als eine solche Einrichtung dient das Rücktrum des Transportbandes. Das Transportband wird über entsprechende Umlenkrollen so geführt, daß es sich entlang des Ablaufbleches bewegt und so die dort aufgefangene abgetropfte und abgeblasene Überzugsmasse abkratzt und mitnimmt.

Auch die DE 197 24 641 A1 (= US 5,954,876) zeigt eine Vorrichtung der eingangs beschriebenen Art mit einer Überziehstation, die eine angetriebene Einrichtung zur Unterstützung der Rückleitung überschüssiger Überzugsmasse auf dem Ablaufblech aufweist. Diese Einrichtung besteht hier aus einem gesonderten kontinuiuerlich angetriebenen Ausräumband. Das Transportband und das Ausräumband können einen gemeinsamen Antrieb aufweisen. Das Ausräumband kann zwei endlose Ketten aufweisen, zwischen denen Querstreben angeordnet sind. Die Querstreben können einen kreisrunden Querschnitt aufweisen und mit ihren Enden in den endlosen Ketten drehbar gelagert sein. Die Querstreben und die Umlenkwellen für die Ketten können so dimensioniert sein, daß die Querstreben beim Umlenken an den Umlenkrollen anliegen und so gereinigt werden. In allen Fällen ist das kontinuierlich angetriebene Ausräumband als Kratzerband ausgebildet und hat die Aufgabe, überschüssige Überzugsmasse kontinuierlich mitzunehmen und von dem Ablaufblech abzukratzen. Durch den fortwährenden Kontakt des Ausräumbandes mit dem Ablaufblech läßt sich eine Wärmeübertragung an dieser Stelle nicht verhindern. Üblicherweise ist die Vorrichtung im Bereich des Ablaufbleches doppelwandig ausgebildet und verfügt hier über einen in der Regel von Warmwasser durchflossenen Heizkreislauf, um eine zu starke Unterkühlung der Überzugsmasse auf dem Ablaufblech zu verhindern, die einen Aufbau der Überzugsmasse an dieser Stelle begünstigen würde. Andererseits ist es insbesondere bei Schokolademasse wichtig, eine zu starke Erwärmung der Masse an dieser Stelle zu vermeiden. Eine zu große Erwärmung der Überzugsmasse an dieser Stelle könnte dazu führen, daß der Temperiergrad der Schokolademasse nachteilig beeinflußt wird. Wenn der kontinuierliche Ausräumförderer zum Mitnehmen der überschüssigen Auszugsmasse bzw. Abkratzen des Ablaufbleches Querstreben mit kreisrundem Querschnitt aufweist, wird nur ein kleiner Querschnitt der an dem Ablaufblech herabfließenden Überschußmasse von den Querstreben erfaßt. Hieraus ergibt sich die Notwendigkeit des kontinuierlichen Antriebs.

Der Erfindung liegt die Aufgabe zugrunde, eine Vorrichtung der eingangs beschriebenen Art bereitzustellen, die insbesondere für thixotrope und/oder fettarme Überzugsmassen geeignet ist und bei der sich eine Schutzheizung des Ablaufbleches nicht nachteilig auswirkt.

Erfindungsgemäß wird dies bei einer Vorrichtung der eingangs beschriebenen Art dadurch erreicht, daß die Einrichtung zur Unterstützung der Rückleitung überschüssiger Überzugsmasse auf dem Ablaufblech eine Anzahl Rakelbleche aufweist, die mit ihrer Haupterstreckungsebene etwa quer zu dem Ablaufblech ausgerichtet und mit Abstand zu dem Ablaufblech angeordnet und geführt sind.

Die Erfindung geht von der Erkenntnis aus, daß es auch bei thixotropen und/oder fettarmen Überzugsmassen nicht unbedingt erforderlich, vielfach jedoch sogar nachteilig ist, den Ausräumförderer kontinuierlich angetrieben auf die Masse kontinuierlich einwirken zu lassen und die überschüssige Masse kontinuierlich von dem Ablaufblech abzukratzen. Durch diesen direkten Kontakt der Elemente des Ausräumförderers mit der Oberfläche des Ablaufbleches ist zwar sichergestellt, daß die gesamte überschüssige Masse an dem Kreislauf teilnimmt. In nachteiliger Weise wird jedoch die sich auf der Oberfläche des Ablaufblechs aufbauende Grenzschicht der überschüssigen Masse immer wieder zerstört. Es kommt zu einem beachtlichen Wärmeeintrag und einem erhöhten Wärmetransport von Wärme der Schutzheizung des Ablaufblechs in die Masse. Dies wirkt sich negativ auf die Temperierung der Masse aus.

Erfindungsgemäß genügt es vielmehr, die Einrichtung schaufel- oder rakelartig nur in Oberflächenbereiche der Masse auf dem Ablaufblech intermittierend eingreifen zu lassen, um die Masse schubweise bzw. schrittweise auf dem Ablaufblech zu fördern. Die schrittweise Anregung der Masse kann durch einen kontinuierlich oder intermittierend betriebenen Antrieb der Einrichtung zur Unterstützung der Rückleitung überschüssiger Überzugsmasse erfolgen. Diese schrittweise Anregung der Bewegung der Masse auf dem Ablaufblech führt sogar dazu, daß die Masse auch dann in Bewegung bleibt, wenn das Rakelblech bereits wieder aus der Masse ausgetreten ist. Mit der neuen Einrichtung zur Unterstützung der Rückleitung überschüssiger Überzugsmasse auf dem Ablaufblech wird schonend in die auf dem Ablaufblech befindliche überschüssige Masse eingegriffen. Die nachteilige Einarbeitung nicht unerheblicher Anteile von Luft und der Wärmetransport in die überschüssige Überzugsmasse auf dem Ablaufblech, wie es im Stand der Technik unvermeidbar ist, wird hier praktisch beseitigt.

Grundlegend wichtig ist es in diesem Zusammenhang, daß die Rakelbleche berührungslos arbeiten, also an dem Ablaufblech gerade nicht entlangkratzen. Dies erbringt den Vorteil, daß zwischen der Oberfläche des Ablaufbleches und den Rakelblechen aus einem Teil der dort befindlichen Überzugsmasse eine Isolierschicht gebildet wird, die den ungewollten Wärmeübergang in die rückgeleitete überschüssige Überzugsmasse behindert. Dies ermöglicht es wiederum, die Schutzheizung des Ablaufbleches vergleichsweise höher zu temperieren, also die Ablaufeigenschaften der Masse im Bereich der Grenzschicht der Masse auf dem Ablaufblech zu verbessern, ohne den Temperiergrad der Masse zu beeinträchtigen. Der Abstand der Kanten der Rakelbleche von dem Ablaufblech kann in der Größenordnung von etwa 4 bis 7 mm, insbesondere 5 mm, zu der dem Transportband zugekehrten Oberfläche des Ablaufblechs gewählt werden. Ein solcher Abstand ist einerseits hinreichend groß, um die Isolierschicht entstehen zu lassen. Andererseits ist ein solcher Abstand ausreichend klein, um auch einen Bewegungsvorgang der Masse innerhalb dieser Isolierschicht zu bewirken. So nimmt vorteilhaft die gesamte Masse an dem Kreislauf teil.

Die Einrichtung zur Unterstützung der Rückleitung überschüssiger Überzugsmasse auf dem Ablaufblech kann einen kontinuierlich oder intermittierend betriebenen Antrieb aufweisen. Die Rakelbleche der angetriebenen Einrichtung greifen bei kontinuierlichem oder intermittierendem Antrieb der Einrichtung auf jeden Fall intermittierend und mit Abstand zu dem Ablaufblech in die Oberfläche der auf dem Ablaufblech befindlichen überschüssigen Überzugsmasse ein.

Die Rakelbleche sollten in einer etwa rechteckigen Bewegungsbahn angetrieben sein. Diese rechteckige Bewegungsbahn kann sich über die gesamte Länge des Ablaufblechs erstrecken. In diesem Falle ist die Einrichtung zur Unterstützung der Rückleitung überschüssiger Überzugsmasse auf dem Ablaufblech als umlaufend angetriebener Förderer ausgebildet. Es ist aber auch möglich, daß sich die Bewegungsbahn nur über einen Teil der Länge des Ablaufblechs erstreckt. Die Rakelbleche werden in diesem Fall hubartig hin- und herbewegt und andererseits quer zu dieser Bewegungsrichtung aus der überschüssigen Masse auf dem Ablaufblech herausbewegt bzw. in diese Masse wieder eingeführt. Die Bewegung wird damit intermittierend auf die Überzugsmasse übertragen. Auch die Auslösung der einzelnen Hübe der Bewegungsbahn der Rakelbleche kann mit zeitlichem Abstand zueinander gesteuert bzw. verändert werden, um in möglichst schonender Weise in die Masse einzugreifen und insoweit eine Anpassung an die Eigenschaften der Masse zu ermöglichen. So kann es durchaus sinnvoll sein, den Antrieb für die Einrichtung schrittweise durchzuführen bzw. immer wieder zwischenzeitlich stillzusetzen. Der Anteil der dabei von den Rakelblechen in die Masse eingebrachten Luft ist praktisch vernachlässigbar.

Es ist sinnvoll, wenn die Rakelbleche eine größere Breite als die durchschnittliche Höhe der überschüssigen Überzugsmasse auf dem Ablaufblech aufweisen. Damit greifen die Rakelbleche über den gesamten Querschnitt - mit Ausnahme des Abstandes von der Oberfläche des Ablaufbleches - ein und erteilen der Masse eine Vorwärtsbewegung in Ablaufrichtung auf dem Ablaufblech. Obwohl in der Regel das Ablaufblech mehr oder weniger geringfügig geneigt angeordnet ist, ist es auf diese Weise auch möglich, die Vorrichtung mit Ablaufblechen einzusetzen, die eine sehr geringe oder gar keine Neigung in Ablaufrichtung besitzen. Die Vorrichtung läßt sich insbesondere auch für Überziehmaschinen einsetzen, die mehr als eine Überziehstation besitzen. Die rechteckige Bewegungsbahn sollte dabei so ausgebildet sein, daß die Rakelbleche während des Rückhubes von der überschüssigen Überzugsmasse auf dem Ablaufblech vollkommen freikommen. Je nach dem, ob die Rakelbleche dabei senkrecht zu der Haupterstreckungsebene des Ablaufbleches ausgerichtet sind oder geneigt angeordnet sind, wird eine entsprechende Bewegung auf die Masse ausgeübt. Die Bewegungskomponenten können auch durch die Bewegungsbahn beeinflußt werden, mit der die Rakelbleche geführt werden.

In der Regel sind die Rakelbleche in einem Rastermaß auf Längsstreben angeordnet. Dies bedeutet, daß der Abstand der Rakelbleche, die sich quer zur Arbeitsrichtung erstrecken, in etwa auch den Vorwärtshub der Antriebseinrichtung bestimmt. Es genügt in vielen Fällen, wenn der Vorwärtshub sogar kleiner als dieses Rastermaß ausgebildet ist. Eine Überdeckung ist somit nicht unbedingt erforderlich.

Für die Realisierung des Antriebes der Einrichtung zur Unterstützung der Rückleitung überschüssiger Überzugsmasse auf dem Ablaufblech gibt es verschiedene Möglichkeiten. Grundsätzlich kann der Antrieb entweder mechanisch und/oder pneumatisch ausgebildet sein. Sinnvoll ist es, wenn ein pneumatisch ausgebildeter Antrieb für die Rakelbleche vorgesehen ist, der zwei hinsichtlich der in etwa rechteckigen Bewegungsbahn aufeinander abgestimmt gesteuerte Kolben/Zylinder-Einheiten aufweist. Die eine Kolben/Zylinder-Einheit ist im wesentlichen für den Vorwärts- und den Rückwärtshub vorgesehen, während die andere Kolben/Zylinder-Einheit für das Absenken bzw. Anheben der Rakelbleche bestimmt ist. Es ist aber auch möglich, daß ein mechanisch ausgebildeter Antrieb für die Rakelbleche vorgesehen ist, der Nockentriebe aufweist. Ein solcher Nockentrieb mit Gleitführung für einen Nocken läßt die gezielte Gestaltung einer im wesentlichen rechteckigen Bewegungsbahn zu, die in den Eckbereichen der Bewegungsbahn abgerundet bzw. mit Übergängen versehen sein kann.

Grundsätzlich ist es möglich und sinnvoll, wenn sich die Einrichtung zur Unterstützung der Rückleitung überschüssiger Überzugsmasse über die gesamte Länge bzw. Erstreckung des Ablaufbleches erstreckt. Es ist aber auch möglich, daß die Einrichtung zur Unterstützung der Rückleitung überschüssiger Überzugsmasse auf dem Ablaufblech nur einem Teil des Ablaufbleches zugeordnet ist. In letzterem Falle ist es sinnvoll, die Rakelbleche mit ihren Längsstreben innerhalb einer Vertiefung bzw. eines Absatzes des Ablaufbleches unterzubringen. Dadurch wird der Rücktrum des Transportbandes wenig beeinträchtigt, und die Bauhöhe der Überzugsmaschine bleibt unverändert.

Sinnvoll ist es, wenn die Rakelbleche mit ihrer Haupterstreckungsebene in einem Winkel von etwa 30° zu dem Ablaufblech geneigt ausgerichtet sind. Die Neigung der Rakelbleche ist damit von dem Ablaufblech weggerichtet. Je nach der Ausbildung der Bewegungsbahn, mit der die Rakelbleche geführt werden, ergibt sich beim Eingriff der Rakelbleche in die Überzugsmasse eine geringfügige Rückbewegung, durch die die Masse wirkungsvoll an Ort und Stelle am Ablaufblech gelöst und in Bewegung versetzt wird. Die Rückwärtsbewegung wird nur für einen geringen Zeitraum aufrechterhalten und geht dann in eine vergleichsweise längere Vorwärtsbewegung über.

Die Erfindung wird anhand bevorzugter Ausführungsbeispiele weiter erläutert und beschrieben. Es zeigen:
- Fig. 1: eine schematisierte Seitenansicht einer Überziehmaschine in einer ersten Ausführungsform,
- Fig. 2: eine ähnliche Darstellung wie Fig. 1, jedoch mit einer zweiten Ausführungsform der Vorrichtung,
- Fig. 3: eine vergrößerte Detaildarstellung der Vorrichtung gemäß Fig. 2 am Ende des Vorwärtshubes,
- Fig. 4: eine vergrößerte Detaildarstellung der Vorrichtung gemäß Fig. 2 am Ende des Aufwärtshubes,
- Fig. 5: eine vergrößerte Detaildarstellung der Vorrichtung gemäß Fig. 2 am Ende des Rückhubes,
- Fig. 6: eine vergrößerte Detaildarstellung der Vorrichtung gemäß Fig. 2 nach dem Absenkhub,
- Fig. 7: eine weitere Ausführungsform der Vorrichtung,
- Fig. 8: eine schematisierte Seitenansicht einer Überziehmaschine in einer weiteren Ausführungsform,
- Fig. 9: eine vergrößernde Detaildarstellung X einer Einzelheit aus Fig. 8,
- Fig. 10: einen Schnitt gemäß der Linie X-X in Fig. 9, und
- Fig. 11: eine vergrößernde Darstellung des Unterteils der Überziehmaschine der Fig. 8.

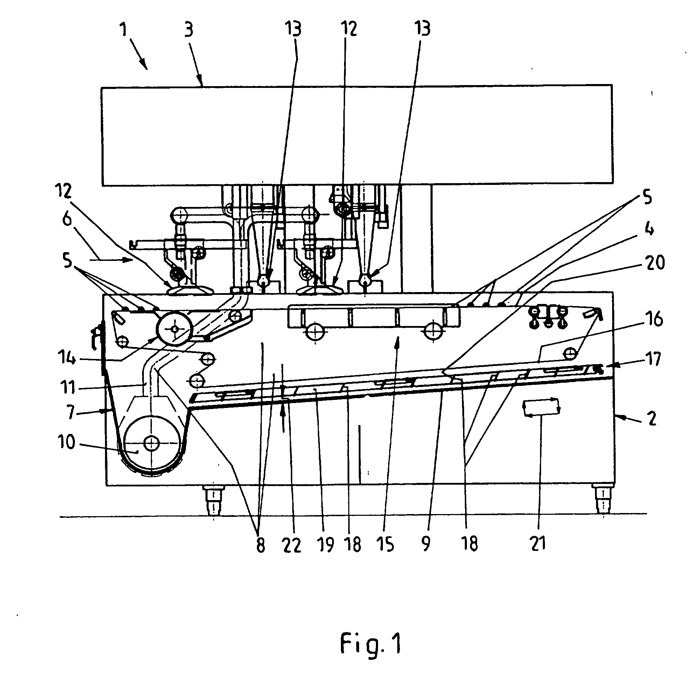

In Fig. 1 ist eine Überziehmaschine 1 mit ihren wesentlichen Bestandteilen schematisch wiedergegeben. Die Überziehmaschine 1 weist ein tischartiges Unterteil 2 und ein darauf abgestütztes Oberteil 3 auf. Im Bereich des Unterteils ist innerhalb einer Verkleidung ein Transportband 4, wie dargestellt, über Umlenkrollen geführt, auf dessen Oberfläche Warenstücke 5 in Richtung eines Pfeils 6 durch die Maschine hindurchgeführt werden. Das endlose Transportband 4 wird in aller Regel kontinuierlich umlaufend angetrieben. Im Unterteil 2 ist eine Wanne 7 vorgesehen, die die Aufgabe hat, überschüssige Überzugsmasse 8, die von dem Transportband abtropft bzw. das Transportband durchfließt, aufzufangen. Wesentlicher Bestandteil dieser Wanne 7 ist ein Ablaufblech 9, welches wie ersichtlich geneigt angeordnet ist. Die Neigung kann bei einzelnen Überzugsmaschinen variieren und in Sonderfällen sogar völlig fehlen. In einer Vertiefung der Wanne 7 ist eine Massepumpe 10 untergebracht, mit deren Hilfe Überzugsmasse 8 in einer nach oben geführten Rohrleitung 11 einem Schleierkasten 12 zugeleitet wird, aus welchem die Überzugsmasse 8 in freiem Fall austritt und dabei auf die Warenstücke 5 gelangt. Es wird bekanntlich immer im Überschuß gearbeitet, so daß erhebliche Teile der Überzugsmasse 8 durch das Transportband 4, welches in der Regel als Stabgitterband ausgebildet ist, hindurchtreten, von dem Transportband 4 mitgeschleppt werden und dann abtropfen, so daß nicht unerhebliche Mengen von Überzugsmasse 8 auf das Ablaufblech 9 gelangen. Diese überschüssige Überzugsmasse kann eine Größenordnung von 10 t/h annehmen.

Hinter dem Schleierkasten 12 ist eine Düse 13 angeordnet, mit deren Hilfe Luft eines Gebläses über die überzogenen Warenstücke 5 geleitet wird, wodurch die noch fließfähige Überzugsmasse verteilt, in ihrer Schichtstärke reduziert und so ein Teil der Überzugsmasse von dem Warenstück 5 abgeblasen wird. Auch dieser Masseanteil ist Bestandteil der überschüssigen Überzugsmasse 8.

Wie in Fig. 1 dargestellt, kann noch ein zweiter Schleierkasten 12 sowie eine weitere Düse 13 vorgesehen sein. Die Überziehmaschine 1 weist damit zwei hintereinander angeordnete Überziehstationen auf. Die Überziehmaschine kann auch eine Bodenwallstation 14 besitzen, mit deren Hilfe der Boden der Warenstücke 5 mit Überzugsmasse 8 benetzt bzw. überzogen wird. Der grundsätzliche Aufbau solcher Überziehmaschinen ist bekannt. Es kann unterhalb des oberen Trums des Transportbandes 4 auch eine Rüttelvorrichtung 15 vorgesehen sein.

Oberhalb des Ablaufbleches 9 und unterhalb des Rücktrums 16 des Transportbandes 4 ist eine Einrichtung 17 zur Unterstützung der Rückleitung überschüssiger Überzugsmasse 8 auf dem Ablaufblech 9 vorgesehen. Wesentliche Bestandteile dieser Einrichtung 17 sind Rakelbleche 18, die an Längsstreben 19 rastermäßig aufgehängt sind und sich über die gesamte Länge der Einrichtung 17 erstrecken. Die Rakelbleche 18 besitzen eine Haupterstreckungsebene 20, die relativ zu dem Ablaufblech 9 im wesentlichen quer ausgerichtet ist. Wie zeichnerisch dargestellt, sind die Rakelbleche 18 etwa in einem Winkel von 30° nach oben und rückwärts geneigt zu der Senkrechten auf dem Ablaufblech angeordnet. Die Rakelbleche 18 werden in einer etwa rechteckigen Bewegungsbahn 21 angetrieben. Die Bewegungsbahn 21 setzt sich aus einem Vorwärtshub, einem Aufwärtshub, einem Rückhub und einem Absenkhub zusammen. Die auf den Längsstreben 19 angeordneten Rakelbleche 18 sind auch während des Vorwärtshubes, also während der abgesenkten Stellung der Einrichtung 17, in einem Abstand 22 von der Oberfläche des Ablaufbleches 9 geführt. Die Rakelbleche 18 arbeiten damit berührungslos, und zwischen der Oberfläche des Ablaufbleches 9 und den unteren Kanten der Rakelbleche 18 kann sich aus der überschüssigen Überzugsmasse 8 auf dem Ablaufblech 19 eine Isolierschicht bilden. Wichtig ist, daß die Einrichtung 17 schrittweise bzw. schubweise in die Überzugsmasse 8 auf dem Ablaufblech 9 eingreift und diese Masse schonend und ohne Einarbeitung von Luft vorwärts entsprechend der Neigung des Ablaufbleches 9 transportiert, so daß diese Masse im Rücklauf zu der Massepumpe 10 zurückgefördert wird und damit erneut im Kreislauf geführt und weiter benutzt werden kann.

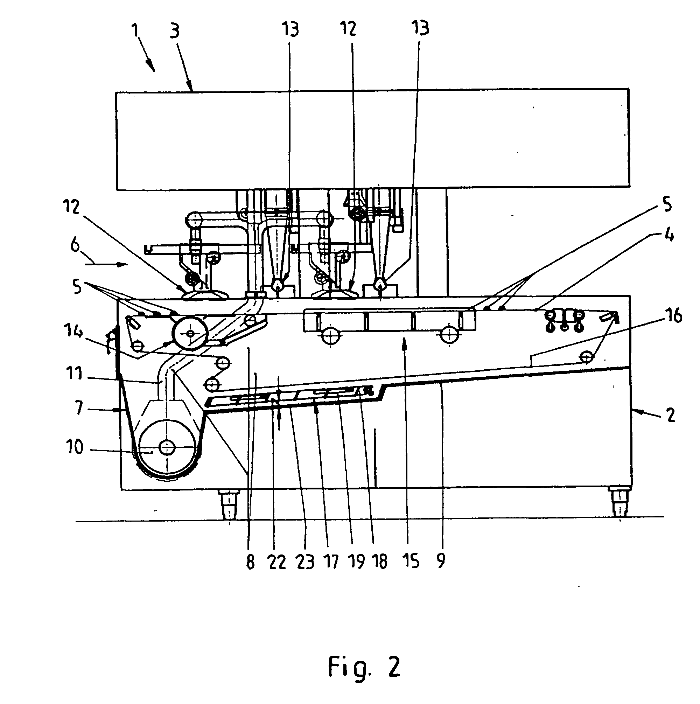

Bei der Ausführungsform gemäß Fig. 1 erstreckt sich die Einrichtung 17 mit den Rakelblechen 18 über die gesamte Länge des Ablaufbleches 9. Fig. 2 zeigt eine grundsätzlich übereinstimmend aufgebaute Überziehmaschine 1, lediglich mit dem Unterschied, daß die Einrichtung 17 mit den Rakelblechen 18 nur einem Teil des Ablaufbleches 9 zugeordnet ist. Das Ablaufblech 9 besitzt eine abgesetzte Vertiefung 23, in der die Einrichtung 17 untergebracht ist.

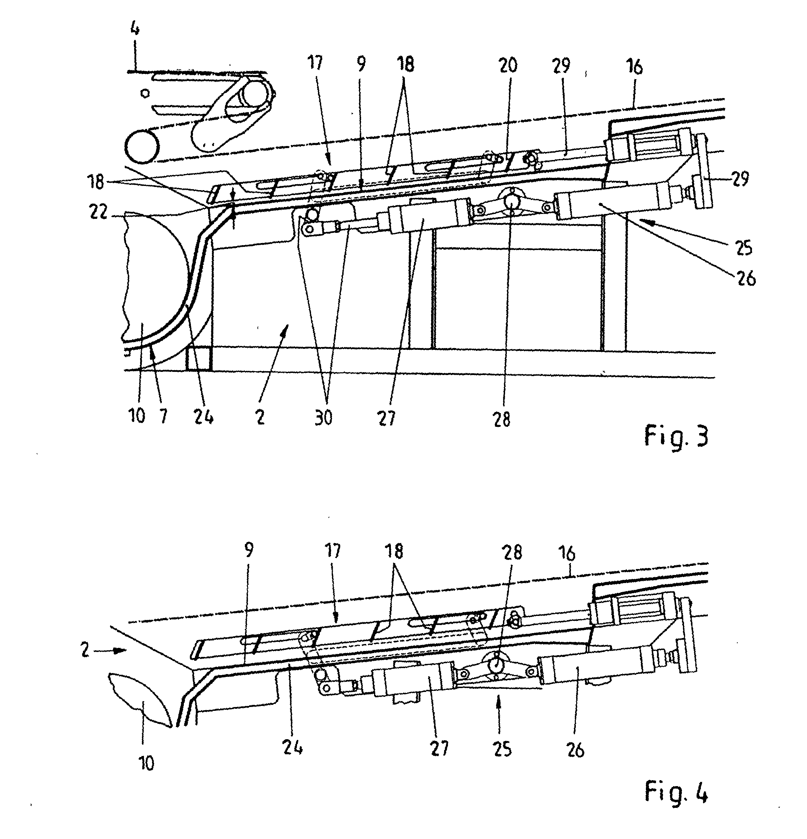

Der weitere Aufbau der in Fig. 2 dargestellten Einrichtung 17 in Verbindung mit der Ausbildung des Ablaufbleches 9 wird anhand der Fig. 3 bis 6 in vergrößernder Darstellung erläutert. Die Fig. 3 bis 6 zeigen verschiedene Bewegungsstadien der Bewegungsbahn 21. Gemäß Fig. 3 ist eine Stellung wiedergegeben, die das Ende des Vorwärtshubes der Bewegungsbahn 21 markiert. Man erkennt hier, daß die Wanne 7 doppelwandig ausgebildet ist, und zwar auch im Bereich des Ablaufbleches 9. Der so gebildete Zwischenraum 24 ist an einen Heizkreislauf für Warmwasser angeschlossen. Sinn dieser Schutzheizung für das Ablaufblech 9 ist es, an der Oberfläche des Ablaufbleches 9, die der überschüssigen Überzugsmasse 8 zugekehrt ist, eine solche Temperatur zu erzeugen, wie es für das Abfließen der Überzugsmasse sinnvoll und notwendig ist. Da auch während des Vorwärtshubes der Einrichtung 17 mit den Rakelblechen 18 der Abstand 22, der in der Größenordnung von 2 bis 6 mm liegen kann, nicht beseitigt wird, arbeiten die Rakelbleche 18 einerseits berührungslos. Andererseits findet keine nennenswerte Vermischung der Überzugsmasse 8 auf dem Ablaufblech statt. Die Einrichtung 17 arbeitet insoweit keinen nennenswerten Anteil von Luft in die Überzugsmasse 8 ein. Andererseits bewirkt die sich entsprechend dem Abstand 22 aufbauende Isolierschicht eine Behinderung des Wärmeflusses von dem höheren Niveau in dem Zwischenraum 24 in die Überzugsmasse 8 hinein, so daß diese vorteilhaft ihren Temperiergrad beibehalten kann.

Für die Bewegung der Einrichtung 17 mit den Rakelblechen 18 entlang der Bewegungsbahn 21 ist ein pneumatischer Antrieb 25 vorgesehen. Der pneumatische Antrieb 25 weist als wesentliche Bestandteile eine erste Kolben/Zylinder-Einheit 26 und eine zweite Kolben/Zylinder-Einheit 27 auf. Die Kolben/Zylinder-Einheiten 26 und 27 sind an einem Lager 28 am Unterteil 2 angelenkt und besitzen jeweils ein Gestänge 29 bzw. 30, mit denen sie über entsprechende Lagerungen und Führungen mit der Einrichtung 17 bzw. deren Längsstreben 19 verbunden sind. Die Gestänge 29 und 30 können auch Schwenkhebel besitzen, die am Rahmen des Unterteils 2 gelagert sind. Der pneumatische Antrieb 25 bzw. die beiden Kolben/Zylinder-Einheiten 26 und 27 sind an eine gemeinsame Steuereinrichtung (nicht dargestellt) angeschlossen, so daß die jeweiligen Bewegungsabläufe aufeinander abgestimmt sind, um die gewünschte Bewegungsbahn 21 (Fig. 1) zu erzeugen.

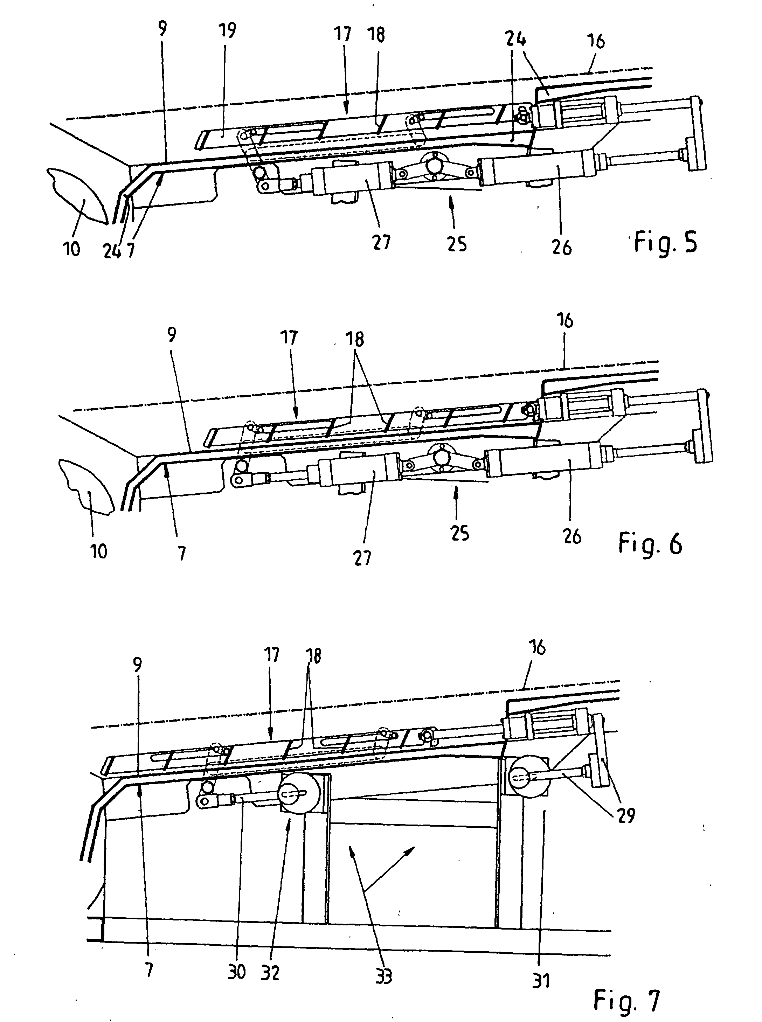

Der Vergleich der Darstellungen in den Fig. 3 und 4 läßt erkennen, daß die Kolben/Zylinder-Einheit 26 ihre Stellung beibehalten hat, während die Kolben/Zylinder-Einheit 27 so betätigt wurde, daß letztlich eine Anhebebewegung der Einrichtung 17 von dem Ablaufblech 9 hinweg erfolgt ist, wodurch der Abstand 22 so vergrößert wurde, daß auch die unteren Kanten der Rakelbleche 18 aus der Überzugsmasse 8 auf dem Ablaufblech 9 ausgetreten sind. In dieser Stellung erfolgt der Rückhub der Einrichtung 17 gemäß der Bewegungsbahn 21. Die Endstellung des Rückhubes ist anhand von Fig. 5 verdeutlicht. Dies bedeutet, daß in diesem Bewegungsabschnitt die Kolben/Zylinder-Einheit 26 betätigt wurde, während die Kolben/Zylinder-Einheit 27 ihre Stellung beibehalten hat. Fig. 6 zeigt schließlich die abgesenkte Stellung der Einrichtung 17 mit den Rakelblechen 18, so daß damit die Bewegungsbahn 21 wieder geschlossen ist. Während dieser Abwärtsbewegung treten die Rakelbleche 18 in die Überzugsmasse 8 auf dem Ablaufblech 9 ein. Durch ihre Schräganordnung in einem Winkel von etwa 30° kann, entsprechend der Abstimmung der Bewegungen der beiden Kolben/Zylinder-Einheiten 26 und 27 aufeinander, eine geringfügige Rückbewegung der Überzugsmasse 8 relativ zum Ablaufblech 9 eintreten. Diese Bewegung ist durchaus nicht sinnlos, sondern bewirkt gleichsam ein Lösen der Überzugsmasse 8 an Ort und Stelle am Ablaufblech 9 und setzt damit die Überzugsmasse 8 in Bewegung. Es versteht sich, daß dieser geringfügige Rückhub bzw. die Rückhubkomponente dann sehr schnell durch den sich anschließenden Vorwärtshub umgekehrt wird.

In Fig. 7 ist ein mechanisch ausgebildeter Antrieb 33 für die Rakelbleche 18 verdeutlicht. Der Antrieb weist zwei Exzenter- oder Nockentriebe 31 auf, die steuerungsmäßig aufeinander abgestimmt sind und an den Gestängen 29 und 30 angreifen.

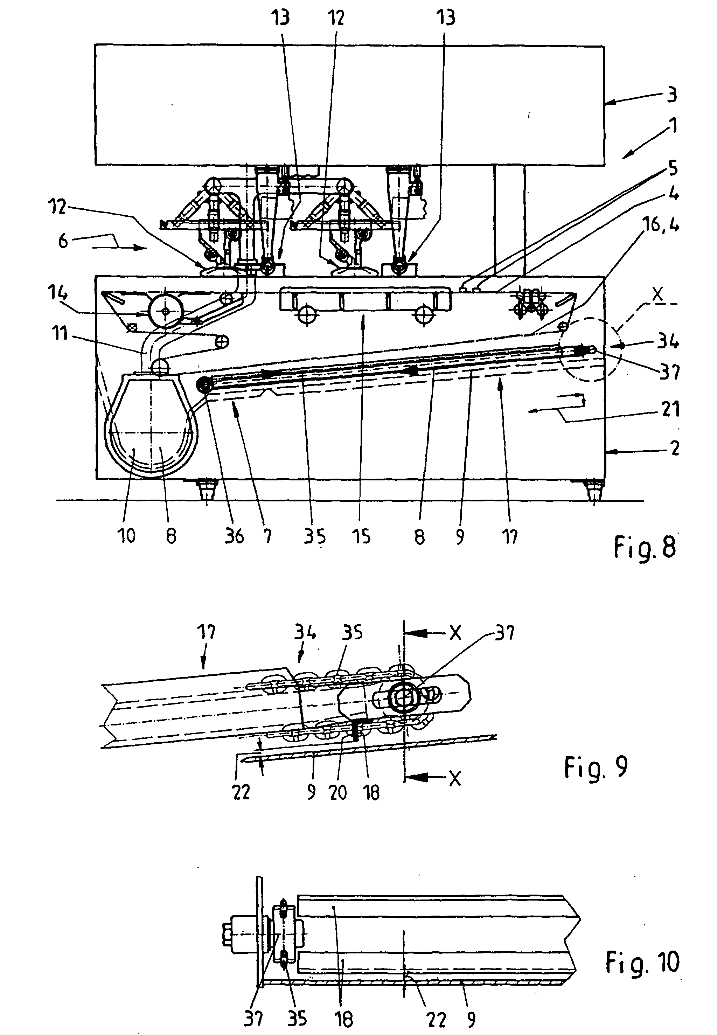

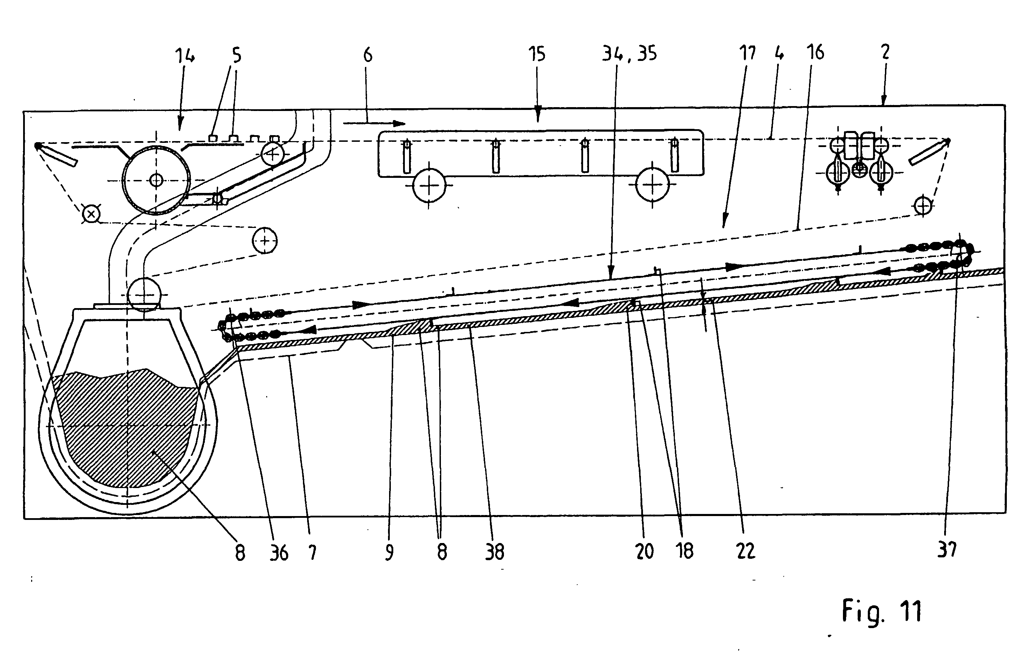

Anhand der Fig. 8 bis 11 ist eine weitere Ausführungsform der Überziehmaschine 1 dargestellt und verdeutlicht. Diese Überziehmaschine 1 ist in ihrem grundsätzlichen Aufbau ähnlich der Überziehmaschine gemäß Fig. 1, so daß auf die vorangehende Beschreibung hingewiesen werden kann. Lediglich die Einrichtung 17 zur Unterstützung der Rückleitung überschüssiger Überzugsmasse 8 auf dem Ablaufblech 9 ist hier abweichend ausgebildet. Die Einrichtung 17 besitzt einen Kettentrieb 34 mit zwei jeweils seitlich angeordneten Ketten 35, die über entsprechende Umlenkwellen 36 und 37 geführt sind und um diese Umlenkwellen 36 und 37 kontinuierlich oder intermittierend angetrieben werden. Zwischen den beiden Ketten 35 erstrecken sich die Rakelbleche 18, die hier einen winkelförmigen Querschnitt aufweisen. Die Einrichtung 17 bzw. die Rakelbleche 18 sind so angeordnet und geführt, daß sie im unteren Trum immer einen sicheren Abstand 22 zu der inneren Oberfläche des Ablaufbleches 8 aufweisen und einhalten. Auf die Darstellung der Fig. 11 wird in diesem Zusammenhang hingewiesen. Zwischen den freien Kanten der Rakelbleche 18 und der Oberfläche des Ablaufbleches 9 entsteht aus der dort befindlichen überschüssigen Masse 8 eine Isolierschicht 38. Die Dicke der Isolierschicht 38 ergibt sich entsprechend dem Abstand 22. Es wird ausdrücklich darauf hingewiesen, daß zumindest Bereiche der Isolierschicht 38 auch an der Förderbewegung teilnehmen, so daß diese Masse ebenfalls im Kreislauf geführt wird, wenngleich auch mit verlangsamter Geschwindigkeit im Vergleich zu den Massebereichen, die von den Rakelblechen 18 unmittelbar erfaßt werden. Durch entsprechende Wahl des Abstandes 22 kann Einfluß auf die Dicke der Grenzschicht und die Geschwindigkeit genommen werden, mit der Massebereiche der Grenzschicht an einem kontinuierlichen Kreislauf teilnehmen. Auch hier ist, wie allgemein üblich, der Zwischenraum zwischen der gehäuseartigen Wanne 7 und dem Ablaufblech 9 an eine Schutzheizung (nicht dargestellt) angeschlossen, die in der Regel als temperierter Wasserkreislauf ausgebildet ist. Durch die Wahl des Abstandes 22 und die Einstellung einer Grenzschicht im Bereich der Isolierschicht 38 wird der unerwünschte Wärmetransport in die Masse reduziert.

### BEZUGSZEICHENLISTE

- 1 -: Überziehmaschine
- 2 -: Unterteil
- 3 -: Oberteil
- 4 -: Transportband
- 5 -: Warenstück
- 6 -: Pfeil
- 7 -: Wanne
- 8 -: Überzugsmasse
- 9 -: Ablaufblech
- 10 -: Massepumpe
- 11 -: Rohrleitung
- 12 -: Schleierkasten
- 13 -: Düse
- 14 -: Bodenwallstation
- 15 -: Rüttelvorrichtung
- 16 -: Rücktrum
- 17 -: Einrichtung
- 18 -: Rakelblech
- 19 -: Längsstrebe
- 20 -: Haupterstreckungsebene
- 21 -: Bewegungsbahn
- 22 -: Abstand
- 23 -: Vertiefung
- 24 -: Zwischenraum
- 25 -: pneumatischer Antrieb
- 26 -: Kolben/Zylinder-Einheit
- 27 -: Kolben/Zylinder-Einheit
- 28 -: Lager
- 29 -: Gestänge
- 30 -: Gestänge
- 31 -: Nockentrieb
- 32 -: Nockentrieb
- 33 -: mechanischer Antrieb
- 34 -: Kettentrieb
- 35 -: Kette
- 36 -: Umlenkwelle
- 37 -: Umlenkwelle
- 38 -: Isolierschicht

## Patentansprüche

1. Vorrichtung zum Überziehen von Warenstücken (5), insbesondere Süßwarenstücken, mit einer fließfähigen Überzugsmasse (8), mit einem endlosen Transportband (4) für die Aufnahme der Warenstücke (5), einem unterhalb des Transportbandes (4) angeordneten Ablaufblech (9) und einer angetriebenen Einrichtung (17) zur Unterstützung der Rückleitung überschüssiger Überzugsmasse (8) auf dem Ablaufblech (9), **dadurch gekennzeichnet, daß** die Einrichtung (17) zur Unterstützung der Rückleitung überschüssiger Überzugsmasse (8) auf dem Ablaufblech (9) eine Anzahl Rakelbleche (18) aufweist, die mit ihrer Haupterstreckungsebene (20) etwa quer zu dem Ablaufblech (9) ausgerichtet und mit Abstand (22) zu dem Ablaufblech (9) angeordnet und geführt sind.

2. Vorrichtung nach Anspruch 1, **dadurch gekennzeichnet, daß** die Rakelbleche (18) mit einem Abstand (22) im Bereich zwischen etwa 4 bis 7 mm, insbesondere 5 mm, zu der dem Transportband (4) zugekehrten Oberfläche des Ablaufblechs (9) angeordnet und geführt sind.

3. Vorrichtung nach Anspruch 1 oder 2, **dadurch gekennzeichnet, daß** die Rakelbleche (18) der angetriebenen Einrichtung (17) bei kontinuierlichem oder intermittierendem Antrieb der Einrichtung (17) in die Oberfläche der auf dem Ablaufblech (9) befindlichen überschüssiger Überzugsmasse (8) intermittierend eingreifend angeordnet sind.

4. Vorrichtung nach Anspruch 3, **dadurch gekennzeichnet, daß** die Rakelbleche (18) in einer etwa rechteckigen Bewegungsbahn (21) angetrieben sind.

5. Vorrichtung nach Anspruch 3 oder 4, **dadurch gekennzeichnet, daß** die Rakelbleche (18) eine größere Breite als die durchschnittliche Höhe der überschüssigen Überzugsmasse (8) auf dem Ablaufblech (9) aufweisen.

6. Vorrichtung nach Anspruch 4, **dadurch gekennzeichnet, daß** die rechteckige Bewegungsbahn (21) so ausgebildet ist, daß die Rakelbleche (18) während des Rückhubes von der überschüssigen Überzugsmasse (8) auf dem Ablaufblech (9) vollkommen freikommen.

7. Vorrichtung nach Anspruch 6, **dadurch gekennzeichnet, daß** die Rakelbleche (18) in einem Rastermaß auf Längsstreben (19) angeordnet sind.

8. Vorrichtung nach einem der Ansprüche 1 bis 7, **dadurch gekennzeichnet, daß** ein pneumatisch ausgebildeter Antrieb (25) für die Rakelbleche (18) vorgesehen ist, der zwei hinsichtlich der in etwa rechteckigen Bewegungsbahn (21) aufeinander abgestimmt gesteuerte Kolben/Zylinder-Einheiten (26, 27) aufweist.

9. Vorrichtung nach einem der Ansprüche 1 bis 7, **dadurch gekennzeichnet, daß** ein mechanisch ausgebildeter Antrieb (33) für die Rakelbleche (18) vorgesehen ist, der Nockentriebe (31, 32) aufweist.

10. Vorrichtung nach einem der Ansprüche 1 bis 9, **dadurch gekennzeichnet, daß** die Einrichtung (17) zur Unterstützung der Rückleitung überschüssiger Überzugsmasse (8) auf dem Ablaufblech (9) nur einem Teil des Ablaufbleches (9) zugeordnet ist.

11. Vorrichtung nach einem der Ansprüche 1 bis 10, **dadurch gekennzeichnet, daß** die Rakelbleche (18) mit ihrer Haupterstrekkungsebene (20) in einem Winkel von etwa 30° zu dem Ablaufblech (9) geneigt ausgerichtet sind.

## Claims

1. Apparatus for coating articles (5), especially candy bars, with a liquid coating material (8), comprising an endless conveyer belt (4) for transporting the articles (5) to be coated through the apparatus, a run-off plate (9) being located below the endless conveyer belt (4) and a driven unit (17) being designed and arranged to assist the recirculation of the surplus coating material (8) being located on the run-off plate (9) **characterized in that** the driven unit (17) assisting the recirculation of the surplus coating material (8) being located on the run-off plate (9) includes a plurality of doctor blades (18), the doctor blades (18) with its main extending plane (20) being positioned substantially transverse with respect to the run-off plate (9) and being arranged and guided with distance (22) to the run-off plate (9).

2. Apparatus of claim 1, **characterized in that**, the doctor blades (18) are designed and arranged to be moved along a path of movement having a distance (22) of approximately 4 to 7 mm, especially 5 mm, with respect to the surface of the run-off plate (9).

3. Apparatus of claim 1 or 2, **characterized in that** during continuous or discontinuous drive of the driven unit (17) the doctor blades (18) are designed and arranged to be moved discontinuously into the surface of the surplus coating material (8) being located on the run-off plate (9).

4. Apparatus of claim 3, **characterized in that** the doctor blades (18) are moved in a motion path (21) having a rectangular shape.

5. Apparatus of claim 3 or 4, **characterized in that** the doctor blades (18) have a width being more than the average thickness of the surplus coating material (8) being located on the run-off plate (9).

6. Apparatus of claim 4, **characterized in that** the rectangular motion path (21) is designed and arranged to get the doctor blades (18) during the backward stroke completely free from contact to the coating material (8) on the run-off plate (9).

7. Apparatus of claim 6, **characterized in that** the doctor blades (18) are arranged on longitudinally extending support bars (19) in a grid like sequence.

8. Apparatus of one of the claims 1 to 7, **characterized in that** a pneumatic drive (25) driving the doctor blades (18) is provided including two piston/cylinder units (26, 27) being associated with one another and being controllable to effect the rectangular motion path (21).

9. Apparatus of one of the claims 1 to 7, **characterized in that** a mechanical drive (33) driving the doctor blades (18) is provided including a plurality of cam drives (31, 32).

10. Apparatus of one of the claims 1 to 9, **characterized in that** the driven unit (17) being designed and arranged to assist the recirculation of the surplus coating material (8) being located on the run-off plate (9) only partly covers the run-off plate (9).

11. Apparatus of one of the claims 1 to 10, **characterized in that** the doctor blades (18) with its main extending plane (20) are located at an angle of approximately 30° with respect to the run-off plate (9).

## Revendications

1. Dispositif pour recouvrir des articles (5), en particulier des pièces de confiserie, avec une pâte de couverture (8) coulante, comportant une bande de transport (105, 4) pour recevoir les articles (5), une tôle d'écoulement (9) disposée au-dessous de la bande de transport (4) et un dispositif entraîné (17) pour soutenir la conduite de retour de la pâte de couverture (8) excédentaire sur la tôle d'écoulement (9), **caractérisé en ce que** le dispositif (17) pour soutenir la conduite de retour de la pâte de couverture (8) excédentaire sur la tôle d'écoulement (9) comporte un nombre de tôles de raclage (18) qui sont orientées avec leur plan d'étendue principale (20) sensiblement obliquement à la tôle d'écoulement (9) et sont disposées et guidées à distance (22) de la tôle d'écoulement (9).

2. Dispositif selon la revendication 1, **caractérisé en ce que** les tôles de raclage (18) sont disposées et guidées à une distance (22) comprise entre 4 et 7 mm environ, en particulier de 5 mm, par rapport à la surface, tournée vers la bande de transport (4), de la tôle d'écoulement (9).

3. Dispositif selon la revendication 1 ou 2, **caractérisé en ce que** les tôles de raclage (18) du dispositif entraîné (17) sont disposées de manière à s'engager par intermittence dans la surface de la pâte de couverture (8) excédentaire, se trouvant sur la tôle d'écoulement (9), lorsque le dispositif (17) est entraîné en continu ou par intermittence.

4. Dispositif selon la revendication 3, **caractérisé en ce que** les tôles de raclage (18) sont entraînées dans une voie de déplacement (21) sensiblement rectangulaire.

5. Dispositif selon la revendication 3 ou 4, **caractérisé en ce que** les tôles de raclage (18) présentent une plus grande largeur que la hauteur moyenne de la pâte de couverture (8) excédentaire sur la tôle d'écoulement (9).

6. Dispositif selon la revendication 4, **caractérisé en ce que** la voie de déplacement (21) rectangulaire est réalisée de manière que les tôles de raclage (18) soient totalement dégagées de la pâte de couverture (8) excédentaire sur la tôle d'écoulement (9), pendant la course de retour.

7. Dispositif selon la revendication 6, **caractérisé en ce que** les tôles de raclage (18) sont disposées suivant une dimension modulaire sur des entretoises longitudinales (19).

8. Dispositif selon l'une des revendications 1 à 7, **caractérisé en ce qu'**il est prévu un dispositif d'entraînement (25) réalisé pneumatique pour les tôles de raclage (18), lequel comporte deux unités à piston et cylindre (26, 27) commandées de manière adaptée l'une à l'autre en ce qui concerne la voie de déplacement (21) sensiblement rectangulaire.

9. Dispositif selon l'une des revendications 1 à 7, **caractérisé en ce qu'**il est prévu un dispositif d'entraînement (33) réalisé mécanique pour les tôles de raclage (18), lequel comporte des mécanismes à cames (31, 32).

10. Dispositif selon l'une des revendications 1 à 9, **caractérisé en ce que** le dispositif (17) pour soutenir la conduite de retour de la pâte de couverture (8) excédentaire sur la tôle d'écoulement (9), n'est associé qu'à une partie de la tôle d'écoulement (9).

11. Dispositif selon l'une des revendications 1 à 10, **caractérisé en ce que** les tôles de raclage (18) sont orientées inclinées, par leur plan d'étendue principale (20), suivant un angle d'environ 30° par rapport à la tôle d'écoulement (9).
